(19) Europäisches Patentamt / European Patent Office / Office européen des brevets

(11) **EP 3 467 136 B1**

(12) **EUROPEAN PATENT SPECIFICATION**

(45) Date of publication and mention of the grant of the patent:
**29.07.2020 Bulletin 2020/31**

(21) Application number: **17845161.3**

(22) Date of filing: **08.08.2017**

(51) Int Cl.:
*C22C 38/18* (2006.01)    *C22C 38/16* (2006.01)
*C22C 38/08* (2006.01)    *C22C 38/12* (2006.01)
*C22C 38/14* (2006.01)    *C22C 38/32* (2006.01)
*C21D 8/02* (2006.01)    *C21D 1/18* (2006.01)
*B21B 1/26* (2006.01)    *C21D 6/00* (2006.01)
*C21D 7/13* (2006.01)    *C21D 9/46* (2006.01)
*C21D 1/02* (2006.01)    *C21D 1/25* (2006.01)
*C22C 38/42* (2006.01)    *C22C 38/44* (2006.01)
*C22C 38/46* (2006.01)    *C22C 38/48* (2006.01)
*C22C 38/50* (2006.01)    *C22C 38/54* (2006.01)

(86) International application number:
**PCT/CN2017/096431**

(87) International publication number:
**WO 2018/040859 (08.03.2018 Gazette 2018/10)**

(54) **LARGE-THICKNESS Q960E ULTRA-HIGH STRENGTH STEEL PRODUCTION METHOD**

VERFAHREN ZUR HERSTELLUNG VON DICKEM Q960E-STAHL MIT ULTRAHOHER FESTIGKEIT

PROCÉDÉ DE PRODUCTION D'ACIER Q960E ULTRA-HAUTE RÉSISTANCE DE GRANDE ÉPAISSEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2016 CN 201610766800**

(43) Date of publication of application:
**10.04.2019 Bulletin 2019/15**

(73) Proprietor: **Nanjing Iron&Steel Co., Ltd.**
**Nanjing, Jiangsu 210035 (CN)**

(72) Inventors:
• **ZHENG, Jianping**
 **Nanjing**
 **Jiangsu 210035 (CN)**
• **YAN, Qiangjun**
 **Nanjing**
 **Jiangsu 210035 (CN)**
• **JIANG, Zaiwei**
 **Nanjing**
 **Jiangsu 210035 (CN)**

• **CHEN, Linheng**
 **Nanjing**
 **Jiangsu 210035 (CN)**
• **WANG, Xin**
 **Nanjing**
 **Jiangsu 210035 (CN)**
• **ZHANG, Yijie**
 **Nanjing**
 **Jiangsu 210035 (CN)**
• **WANG, Sicong**
 **Nanjing**
 **Jiangsu 210035 (CN)**

(74) Representative: **Gong, Jinping**
 **CocreateIP**
 **Eggenfeldenerstraße 56**
 **81929 München (DE)**

(56) References cited:
 **EP-A1- 2 980 255**    **CN-A- 101 451 212**
 **CN-A- 101 451 221**    **CN-A- 101 451 221**
 **CN-A- 102 286 695**    **CN-A- 102 560 274**
 **CN-A- 104 480 406**    **CN-A- 106 244 922**
 **CN-B- 103 589 969**    **JP-A- 2001 164 334**

**Description**

**TECHNICAL FIELD**

The disclosure relates to a production method of ultra-high strength steel, and particularly relates to a production method of large-thickness Q960E ultra-high strength steel, belonging to the technical field of steel and iron.

**BACKGROUND**

Ultra-high strength steel is a resource-saving product, and is also a product having high technical content and high additional values. With the significant development of a large-scale project in China, high-strength steel of Q890D grade and above is widely applied in the aspects of engineering machinery, mining, lifting tramcars, ocean platforms and the like, which has the characteristics of simple structure, light weight, high safety and long service time and is capable of bearing large dynamic and static load. However, since a casting blank is influenced by thickness in China, a large-thickness structure member can only be replaced by a conventional Q345-Q550 series low-alloy structure steel at present, whereas since this structure steel is low in strength, under the harsh service conditions, use strength is not high and an engineering accident easily occurs. In view of this, for large-scale engineering structure steel, domestic enterprises can only import large-thickness ultra-high strength steel at high price.

Many domestic steel factories have studied production processes of ultra-high strength steel of Q960 and above, but there are no substantive reports about large-thickness Q960E ultra-high strength steel at present. Minimal products in patent documents that have been published are applied to actual engineering. The present application introduces a production method of large-thickness Q960E ultra-high strength steel. The large-thickness Q960E ultra-high strength steel can be applied to a large crane base in China, and its usability is accepted by industries.

A Publication Patent CN102560274A discloses tempering ultra-high strength steel of yield strength being 1000MPa grade and a production method thereof. Reasonable properties are obtained via tempering through reasonable component design, however, steel published by this patent has a production thickness of 12-50mm, relatively low impact work at -40°C, only less than 60J, and poor toughness.

CN 101451221 A describes a high strength steel.

A Publication Patent CN102134680A discloses ultra-high strength steel of yield strength being 960MPa grade and a production method thereof. Yield strength being more than 960MPa is obtained through quenched-tempered heat treatment by adopting low carbon and 1.05% alloy design, however, the whole production method adopts a hot continuous rolling process to produce a thickness of only 8mm, production procedure is tedious and the production method gains only lab data.

Considering that 70mm large-thickness Q960E ultra-high strength structure steel having optimal property requires not only high strength and toughness property but also good welding property, and all the requirements require easy production and low cost. Thus, the present application makes study on chemical components and a production process of the 70mm large-thickness Q960E ultra-high strength structure steel and designs a production method of large-thickness Q960E ultra-high strength steel.

**SUMMARY**

The technical problem to be solved by the discloses is to overcome the defects of the prior art to provide a production method of large-thickness Q960E ultra-high strength steel plate as specified in any of claims 1 to 2. The production method is simple and practicable, short in production procedure and low in cost, and the produced steel is good in mechanical property, large in thickness, high in strength and good in plasticity, impact word value and welding property.

In order to solve the above technical problem, the disclosure provides a production method of large-thickness Q960E ultra-high strength steel, the production method comprising the following procedures: desulfuration pretreatment of molten iron, converter smelting, LF+RH refining, continuous casting, casting blank stacking and slow cooling, casting blank inspection, casting blank determination, casting blank acceptance, casting blank heating, descaling, rolling, air cooling, flaw detection, shot blasting, quenching, tempering, straightening, cutting and sampling, jet printing of a marker, inspecting and putting in storage, wherein,

(1) the ultra-high strength steel comprises the following chemical components by weight percent: 0.14-0.16% of C, 0.2-0.3% of Si, 1.1-1.2% of Mn, ≤0.008% of P, ≤0.0015% of S, 0.4-0.6% of Cr, <0.1% of Cu, 0.6-0.8% of Ni, 0.1-0.3% of Mo, 0.02-0.04% of Nb, 0.01-0.02% of Ti, 0.04-0.06% of V, ≤0.0015% of B, 0.025-0.04% of Al, ≤0.61% of Ceq, and the balance of Fe and inevitable impurities; the equivalent (%) of C in the chemical components of the ultra-high strength steel is calculated by a formula as follows:

$$Ceq=C+Mn/6+(Cr+Mo+V)/5+(Cu+Ni)/15\leq0.61;$$

(2) the casting blank is heated: the temperature of a heating section is 1240-1250°C, the temperature of a soaking section is controlled to 1220°C, the tapping temperature is between 1180°C and 1200°C, the in-furnace time is 350-420min, the second-stage initial rolling temperature is ≤1050°C, the thickness of a finished product is 70mm, the thickness of the casting blank to be heated is controlled to ≥133mm, the second-stage final rolling temperature is 850-860°C, and air cooling is carried out after rolling;

(3) quenched-tempered heat treatment is carried out: the quenching temperature is controlled to 880-890°C, the temperature-raising rate is 1.5±0.1min/mm, the in-furnace time is 125-135min, the tempering temperature is controlled to 590-600°C, the temperature-raising rate is 2.5±0.1min/mm, the in-furnace time is 220-230min, and slow cooling is carried out to room temperature;

(4) pre-straightening is carried out at 790-830°C first when hot rolling straightening is carried out.

The technical solution further defined by the disclosure is as follows:

Further, in the production method of the above large-thickness Q960E ultra-high strength steel, the ultra-high strength steel comprises the following chemical components by weight percent: 0.16% of C, 0.23% of Si, 1.19% of Mn, ≤0.005% of P, ≤0.0012% of S, ≤0.1% of Cu, 0.45% of Cr, 0.78% of Ni, 0.2% of Mo, 0.02% of Nb, 0.013% of Ti, 0.044% of V, 0.0012% of B, 0.033% of Alt, 0.55% of Ceq, and the balance of Fe and inevitable impurities.

In the production method of the above large-thickness Q960E ultra-high strength steel, a two-stage rolling process is adopted when the casting blank is rolled, the deformation rate of rolling at a first stage is ≥55%, and the deformation rate of rolling at a second stage is ≥45%.

In the production method of the above large-thickness Q960E ultra-high strength steel, the mechanical properties of the ultra-high strength steel can achieve the following levels: yield strength is ≥1000MPa, tensile strength is ≥1050MPa, elongation is ≥13%, and Akv impact work value at -40°C is ≥90J; a microstructure is a tempered sorbite structure, the size of the grain is controlled to 10μm-12μm, and the grain degree is controlled to 8-9 grades.

The disclosure has the beneficial effects that:

(1) through component design that a few amount of Cr, Ni and Mo alloys and Nb+Ti+V+B microalloys are added in medium carbon, the equivalent of C is ≤0.61, production procedure is short and cost is low; (2) this method adopts a reasonable controlled rolling process to produce ultra-high strength steel having a thickness of 70 mm, and each mechanical property index achieves standard requirements of engineering machinery of a domestic major enterprise on material design through the optimal quenched-tempered heat treatment process, namely, yield strength is ≥1000MPa, tensile strength is ≥1050MPa, elongation is ≥13%, Akv impact work value at -40°C is ≥ 90J; (3) this invention method successfully solves the technical difficulties of influence of the high strength, low plasticity, low impact work value and high C equivalent of the 70mm large-thickness ultra-high strength steel on wielding properties, the prepared steel is good in mechanical property, large in thickness, high in strength and good in plasticity, impact work value and welding property; (4) by using this invention method, a production line of a four-roller reversible 2800mm rolling mill consisting of a roughing mill having a rolling force of 5000 tons and a finishing mill having a rolling force of 4000 tons is capable of producing high-strength high-toughness large-thickness Q960E high strength steel, and the Q960E high strength steel can be applied to domestic large-scale engineering mechanical equipment, thereby greatly reducing dependence on import and high cost; (5) due to high strength after rolling, a 70mm steel plate needs pre-straightening at 790-830°C to ensure the original shape of the plate, through quenching is ensured on the basis of persisting in the production requirement of low cost, and a principle that a few amount of Cr and B elements capable of improving hardenability are added in medium carbon is adopted in component design so as to improve a cooling rate design thought and meet the production requirements of high-grade equipment; (6) since experimental steel is high in strength, the 70 mm steel plate undergoes controlled rolling in a high-temperature large-pressure mode, and a whole compression ratio is >4 times, so a blank having a thickness of 320mm is selected, soaking temperature is controlled to about 1220°C, and in-furnace time is properly extended, so that the uniform steel temperature of the whole blank is ensured, and the temperature of red-black steel is avoided; (7) since the finished product is 70mm in thickness, a two-stage rolling method is adopted in order to avoid segregation of a center and influence the strength and the impact value in the process of rolling, and the deformation rate of rolling at a first stage is ≥55%, the total deformation rate of rolling at a second stage is ≥45%, and thus it is ensured that there is no significant difference from a surface structure to a central structure.

## BRIEF DESCRIPTION OF THE DRAWINGS

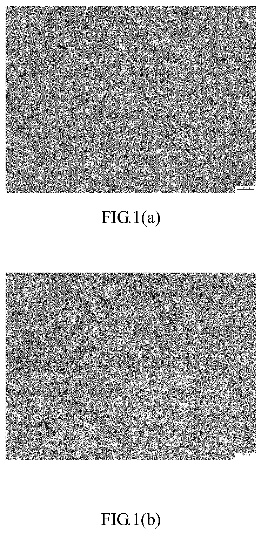

Fig.1 (a) is a photograph of a metallographic structure at the 1/4 thickness position of large-thickness Q960E ultra-high strength steel according to the disclosure; and

Fig.1 (b) is a photograph of a metallographic structure at the 1/2 thickness position of large-thickness Q960E ultra-high strength steel according to the disclosure.

## DESCRIPTION OF THE EMBODIMENTS

Disclosure **1**

This example provides a production method of large-thickness Q960E ultra-high strength steel, the production method comprising the following procedures: desulfuration pretreatment of molten iron, converter smelting, LF+RH refining, continuous casting, casting blank stacking and slow cooling, casting blank inspection, casting blank determination, casting blank acceptance, casting blank heating, descaling, rolling, air cooling, flaw detection, shot blasting, quenching, tempering, straightening, cutting and sampling, jet printing of a marker, inspecting and putting in storage, wherein,

(1) the ultra-high strength steel comprises the following chemical components by weight percent: 0.15% of C, 0.28% of Si, 1.15% of Mn, ≤0.008% of P, ≤0.0015% of S, ≤0.1% of Cu, 0.59% of Cr, 0.61% of Ni, 0.28% of Mo, 0.023% of Nb, 0.018% of Ti, 0.058% of V, 0.0014% of B, 0.025% of Al, 0.57% of Ceq, and the balance of Fe and inevitable impurities; the equivalent (%) of C in the chemical components of the ultra-high strength steel is calculated by a formula as follows:

$$Ceq=C+Mn/6+(Cr+Mo+V)/5+(Cu+Ni)/15\leq0.61;$$

(2) the casting blank is heated: the temperature of a heating section is 1240-1250°C, the temperature of a soaking section is controlled to 1207°C, the tapping temperature is 1195°C, the in-furnace time is 405min, the second-stage initial rolling temperature is 886°C, the thickness of a finished product is 70mm, the thickness of the holding casting blank is 133mm, the second-stage final rolling temperature is 856°C, and air cooling is carried out after rolling;

(3) quenched-tempered heat treatment is carried out: the quenching temperature is controlled to 887°C, the temperature-raising rate is 1.4min/mm, the in-furnace time is 122min, the tempering temperature is controlled to 599°C, the temperature-raising rate is 2.4min/mm, the in-furnace time is 221min, and slow cooling is carried out to room temperature; and

(4) pre-straightening is carried out at 828°C first when hot rolling straightening is carried out.

In this example, a two-stage rolling process is adopted when the casting blank is rolled, the deformation rate of rolling at a first stage is ≥55%, and the deformation rate of rolling at a second stage is ≥45%; the mechanical properties of the produced ultra-high strength steel achieve the following levels, see Table 1 below.

**Table 1 Mechanical Property**

| Thickness of steel plate | Yield strength (MPa) | Standard requirement (MPa) | Tensile strength (MPa) | Standard requirement (MPa) | Elongation (%) | Standard requirement (%) | Impact work value/ Mean impact mean value (-40°C, Akv) | Standard requirement (-40°C, Akv) |
|---|---|---|---|---|---|---|---|---|
| 70mm | 1025 | ≥970 | 1082 | 980-1120 | 15.5 | ≥12 | 98, 97, 101/99 | ≥30 |

Yield strength is ≥1000MPa, tensile strength is ≥1050MPa, elongation is ≥13%, and the Akv impact work value at -40°C is ≥90J; a microstructure is a tempered sorbite structure, the size of the grain is controlled to 10μm-12μm, and the grain degree is controlled to 8-9 grades.

## Example 2

This example provides a production method of large-thickness Q960E ultra-high strength steel, the production method comprising the following procedures: desulfuration pretreatment of molten iron, converter smelting, LF+RH refining, continuous casting, casting blank stacking and slow cooling, casting blank inspection, casting blank determination, casting blank acceptance, casting blank heating, descaling, rolling, air cooling, flaw detection, shot blasting, quenching, tempering, straightening, cutting and sampling, jet printing of a marker, inspecting and putting in storage, wherein,

(1) the ultra-high strength steel comprises the following chemical components by weight percent: 0.16% of C, 0.23% of Si, 1.19% of Mn, ≤0.005% of P, ≤0.0012% of S, ≤0.1% of Cu, 0.45% of Cr, 0.78% of Ni, 0.2% of Mo, 0.02% of Nb, 0.013% of Ti, 0.044% of V, 0.0012% of B, 0.033% of Al, 0.55% of Ceq, and the balance of Fe and inevitable impurities;

(2) a 320mm casting blank is selected and heated: the temperature of a heating section is 1240-1250°C, the temperature of a soaking section is controlled to 1220°C, the tapping temperature is 1180°C, the in-furnace time is 373min, the second-stage initial rolling temperature is 890°C, the thickness of a finished product is 70mm, the thickness of the holding casting blank is ≥133mm, the second-stage final rolling temperature is 854°C, and air cooling is carried out after rolling;

(3) quenched-tempered heat treatment is carried out: the quenching temperature is controlled to 881°C, the temperature-raising rate is 1.5 min/mm, the in-furnace time is 130min, the tempering temperature is controlled to 595°C, the temperature-raising rate is 2.5min/mm, the in-furnace time is 223min, and slow cooling is carried out to room temperature; and

(4) pre-straightening is carried out at 798°C first when hot rolling straightening is carried out.

In this example, a two-stage rolling process is adopted when the casting blank is rolled, the deformation rate of rolling at a first stage is ≥55%, and the deformation rate of rolling at a second stage is ≥45%; the mechanical properties of the produced ultra-high strength steel achieve the following levels, see Table 2 below.

**Table 2 Mechanical Property**

| Thickness of steel plate | Yield strength (MPa) | Standard requirement (MPa) | Tensile strength (MPa) | Standard requirement (MPa) | Elongation (%) | Standard requirement (%) | Impact work value/ Impact mean value (-40°C, Akv) | Standard requirement (-40°C, Akv) |
|---|---|---|---|---|---|---|---|---|
| 70mm | 1010 | ≥970 | 1065 | 980-1120 | 14 | ≥12 | 90, 95, 100/95 | ≥30 |

Disclosure **3**

This example provides a production method of large-thickness Q960E ultra-high strength steel, the production method comprising the following procedures: desulfuration pretreatment of molten iron, converter smelting, LF+RH refining, continuous casting, casting blank stacking and slow cooling, casting blank inspection, casting blank determination, casting blank acceptance, casting blank heating, descaling, rolling, air cooling, flaw detection, shot blasting, quenching, tempering, straightening, cutting and sampling, jet printing of a marker, inspecting and putting in storage, wherein,

(1) the ultra-high strength steel comprises the following chemical components by weight percent: 0.14% of C, 0.25% of Si, 1.1% of Mn, ≤0.008% of P, ≤0.0015% of S, ≤0.1% of Cu, 0.4% of Cr, 0.8% of Ni, 0.1% of Mo, 0.039% ofNb, 0.015% of Ti, 0.04% of V, 0.0011% of B, 0.038% of Alt, 0.48% of Ceq, and the balance of Fe and inevitable impurities; the equivalent (%) of C in the chemical components of the ultra-high strength steel is calculated by a formula as follows:

$$Ceq=C+Mn/6+(Cr+Mo+V)/5+(Cu+Ni)/15\leq0.61;$$

(2) the casting blank is heated: the temperature of a heating section is 1240-1250°C, the temperature of a soaking section is controlled to 1210°C, the tapping temperature is 1189°C, the in-furnace time is 378min, the second-stage rolling temperature is 887°C, the thickness of a finished product is 70mm, the thickness of the holding casting blank is 133mm, the second-stage final rolling temperature is 858°C, and air cooling is carried out after rolling;

(3) quenched-tempered heat treatment is carried out: the quenching temperature is controlled to 885°C, the temperature-raising rate is 1.5min/mm, the in-furnace time is 125min, the tempering temperature is controlled to 591°C, the temperature-raising rate is 2.6min/mm, the in-furnace time is 228min, and slow cooling is carried out to room temperature; and

(4) pre-straightening is carried out at 825°C first when hot rolling straightening is carried out.

In this example, a two-stage rolling process is adopted when the casting blank is rolled, the deformation rate of rolling at a first stage is ≥55%, and the deformation rate of rolling at a second stage is ≥45%; the mechanical properties of the produced ultra-high strength steel achieve the following levels, see Table 3 below.

**Table 3 Mechanical Property**

| Thickness of steel plate | Yield strength (MPa) | Standard requirement (MPa) | Tensile strength (MPa) | Standard requirement (MPa) | Elongation (%) | Standard requirement (%) | Impact work value/ Impact mean value (-40°C, Akv) | Standard requirement (-40°C, Akv) |
|---|---|---|---|---|---|---|---|---|
| 70mm | 1035 | ≥970 | 1079 | 980-1120 | 13.5 | ≥12 | 93, 98, 103/98 | ≥30 |

Yield strength is ≥1000MPa, tensile strength is ≥1050MPa, elongation is ≥13%, and the Akv impact work value at -40°C is ≥90J.

Fig.1 (a) and (b) show metallographic structures after tempering under the conditions that the heating temperature is 595°C, the temperature-raising rate is 2.5min/mm and heating time is 223min. It can be seen from structures in the figures that metallographic structures are from a 1/4 thickness position to a 1/2 thickness position, a microstructure is a tempered sorbite structure, sorbite structures are from a 1/4 thickness position to a central position, the size of the grain is controlled to 10μm-12μm, and the grain degree is controlled to 8-9 grades.

In the disclosure, 70mm Q960E ultra-high strength steel is developed through component design that a few amount of Cr, Ni and Mo alloys and Nb+V+Ti+B microalloys are added in medium carbon in combination with a reasonable controlled rolling process and a quenched-tempered heat treatment process. After controlled rolling and quenched-tempered heat treatment, among its mechanical properties, yield strength is ≥1000MPa, tensile strength is ≥1050MPa, elongation is ≥13%, and the Akv impact work value at -40°C is ≥90J. Since there is no standard mechanical property requirements on 70mm Q960E ultra-high strength in National Standard, all of these strength and plasticity indexes obtained by the disclosure achieve a design standard of engineering machinery mechanical properties of domestic large-scale enterprises. Due to high strength and large thickness, in the process of actual industrial production, high requirements are needed for cooling capability of rolling equipment and a quenching machine, and meanwhile, since a 2800mm double-frame rolling mill is a reversible four-high mill consisting of a roughing mill having a rolling force of 5000 tons and a finishing mill having a rolling force of 4000 tons, the rolling force is low and cannot meet rolling requirements under large pressure during the production, the large original grain size is easily caused, and even a mixed crystal phenomenon occurs, thereby seriously influencing mechanical properties matched with strength and low-temperature toughness. Through component design that high-hardenability alloy elements are added in medium carbon, defects that the conventional rolling production line cannot produce high-strength high-toughness high-welding stability Q960E high strength steel due to limited equipment capability are compensated. Meanwhile, rolling is finished at high temperature, so that high-temperature strength is low, and the rolling capability of low-rolling force equipment is exerted.

Except for the above examples, the disclosure has other embodiments.

**Claims**

1. A production method of large-thickness Q960E ultra-high strength steel plate, the production method comprising: desulfuration pretreatment of molten iron, converter smelting, LF+RH refining, continuous casting, casting blank stacking and slow cooling, casting blank inspection, casting blank determination, casting blank acceptance, casting blank heating, descaling, rolling, air cooling, flaw detection, shot blasting, quenching, tempering, straightening, cutting and sampling, jet printing of a marker, inspecting and putting in storage, wherein,

   (1) the ultra-high strength steel comprises the following chemical components by weight percent: 0.14-0.16% of C, 0.2-0.3% of Si, 1.1-1.2% of Mn, ≤0.008% of P, ≤0.0015% of S, 0.4-0.6% of Cr, ≤0.1% of Cu, 0.6-0.8% of Ni, 0.1-0.3% of Mo, 0.02-0.04% of Nb, 0.01-0.02% of Ti, 0.04-0.06% of V, ≤0.0015% of B, 0.025-0.04% of Al, ≤0.61% of Ceq, and the balance of Fe and inevitable impurities;
   the equivalent (%) of C in the chemical components of the ultra-high strength steel is calculated by a formula as follows:

   $$Ceq=C+Mn/6+(Cr+Mo+V)/5+(Cu+Ni)/15 \leq 0.61;$$

   and wherein,
   a two-stage rolling process is adopted when the casting blank is rolled, the deformation rate of rolling at a first stage is ≥55%, and the deformation rate of rolling at a second stage is ≥45%;
   (2) the casting blank is heated: the temperature of a heating section is 1240-1250°C, the temperature of a soaking section is controlled to 1220°C, the tapping temperature is between 1180°C and 1200°C, the in-furnace time is 350-420min, the second-stage initial rolling temperature is ≤1050°C, the thickness of a finished product is 70mm, the thickness of the casting blank to be heated is controlled to ≥133mm, the second-stage final rolling temperature is 850-860°C, and air cooling is carried out after rolling;
   (3) quenched-tempered heat treatment is carried out: the quenching temperature is controlled to 880-890°C, the temperature-raising rate is 1.5±0.1min/mm, the in-furnace time is 125-135min, the tempering temperature is controlled to 590-600°C, the temperature-raising rate is 2.5±0.1min/mm, the in-furnace time is 220-230min, and slow cooling is carried out to room temperature; and

(4) pre-straightening is carried out at 790-830°C firstly when hot rolling straightening is carried out.

2. The production method of large-thickness Q960E ultra-high strength steel plate according to claim 1, wherein, the ultra-high strength steel comprises the following chemical components by weight percent: 0.16% of C, 0.23% of Si, 1.19% of Mn, ≤0.005% of P, ≤0.0012% of S, ≤0.1% of Cu, 0.45% of Cr, 0.78% of Ni, 0.2% of Mo, 0.02% of Nb, 0.013% of Ti, 0.044% of V, ≤0.0012% of B, 0.033% of Al, and 0.55% of Ceq.

**Patentansprüche**

1. Ein Herstellungsverfahren für ultrahochfeste Stahlplatten Q960E mit großer Dicke enthaltend: Entschwefelungsvorbehandlung von geschmolzenem Eisen, Konverterschmelzen, LF- und RH-Raffinieren, Stranggießen, Stapeln und langsames Abkühlen des Gussrohlings, Inspektion des Gussrohlings, Bestimmung des Gussrohlings, Annahme des Gussrohlings, Erhitzen des Gussrohlings, Entzundung, Walzen, Luftkühlung, Fehlererkennung, Kugelstrahlen, Abschrecken, Tempern, Richten, Schneiden und Probenahme, Jetdruck eines Markers, Inspektion und Lagerung, wobei

(1) der ultrahochfeste Stahl die folgenden chemischen Komponenten in Gewichtsprozent umfasst: 0,14-0,16% C, 0,2-0,3% Si, 1,1-1,2% Mn, ≤ 0,008% P, ≤ 0,0015% S, 0,4-0,6% Cr, ≤ 0,1% Cu, 0,6-0,8% Ni, 0,1-0,3% Mo, 0,02-0,04% Nb, 0,01-0,02% Ti, 0,04-0,06% V, ≤ 0,0015% B, 0,025-0,04% Al, ≤ 0,61% Ceq, und der Rest von Fe und unvermeidlichen Verunreinigungen;
wobei das Äquivalent (%) von C in den chemischen Komponenten des ultrahochfesten Stahls nach folgender Formel berechnet wird:

$$Ceq = C + Mn/6 + (Cr + Mo + V)/5 + (Cu + Ni)/15 \leq 0,61;$$

und wobei
ein zweistufiger Walzprozess angewendet wird, wenn der Gussrohling gewalzt wird, wobei die Verformungsrate des Walzens in einer ersten Stufe ≥ 55% beträgt und die Verformungsrate des Walzens in einer zweiten Stufe ≥ 45% beträgt;
(2) der Gussrohling erhitzt wird: die Temperatur eines Heizabschnitts beträgt 1240-1250 °C, die Temperatur eines Einweichabschnitts wird auf 1220 °C geregelt, die Ausgusstemperatur liegt zwischen 1180 °C und 1200 °C, die Zeit im Ofen beträgt 350-420 min, die anfängliche Walztemperatur der zweiten Stufe beträgt ≤ 1050 °C, die Dicke eines fertigen Produkts beträgt 70 mm, die Dicke des zu erhitzenden Gussrohlings wird auf ≥ 133 mm eingestellt, die endgültige Walztemperatur der zweiten Stufe beträgt 850-860 °C und eine Luftkühlung wird nach dem Walzen durchgeführt;
(3) eine abgeschreckte und temperierte Wärmebehandlung durchgeführt wird: die Abschrecktemperatur wird auf 880-890 °C geregelt, die Temperaturerhöhungsrate beträgt 1,5 ± 0,1 min/mm, die Zeit im Ofen beträgt 125-135 min, die Tempertemperatur wird auf 590-600 °C geregelt, die Temperaturerhöhungsrate beträgt 2,5 ± 0,1 min/mm, die Zeit im Ofen beträgt 220-230 min und ein langsames Abkühlen zu Raumtemperatur wird durchgeführt; und
(4) ein Vorrichten zuerst bei 790-830 °C durchgeführt wird, wenn das Richten durch Warmwalzen durchgeführt wird.

2. Das Herstellungsverfahren für ultrahochfeste Stahlplatten Q960E mit großer Dicke gemäß Anspruch 1, wobei der ultrahochfeste Stahl mit den folgenden chemischen Komponenten in Gewichtsprozent umfasst: 0,16% C, 0,23% Si, 1,19% Mn, ≤ 0,005% P, ≤ 0,0012% S, ≤ 0,1% Cu, 0,45% Cr, 0,78% Ni, 0,2% Mo, 0,02% Nb, 0,013% Ti, 0,044% V, ≤ 0,0012% B, 0,033% Al und 0,55% Ceq.

**Revendications**

1. Une méthode de production de tôles d'acier à très haute résistance Q960E de grande épaisseur, la méthode de production comprenant: le prétraitement de désulfuration du fer fondu, la fusion dans convertisseur, le raffinage LF + RH, la coulée continue, l'empilage de l'ébauche de coulée et le refroidissement lent, l'inspection de l'ébauche de coulée, détermination de l'ébauche de coulée, acceptation de l'ébauche de coulée, chauffage de l'ébauche de coulée, détartrage, laminage, refroidissement par air, détection de défauts, grenaillage, trempe, revenu, redressage, découpe et échantillonnage, impression au jet d'un marqueur, inspection et mise en stock, dans lequel

(1) l'acier à ultra-haute résistance comprend les composants chimiques suivants en pourcentage en poids: 0,14-0,16% de C, 0,2-0,3% de Si, 1,1-1,2% de Mn, ≤0,008% de P, ≤0,0015% de S , 0,4-0,6% de Cr, ≤0,1% de Cu, 0,6-0,8% de Ni, 0,1-0,3% de Mo, 0,02-0,04% de Nb, 0,01-0,02% de Ti, 0,04-0,06% de V, ≤0,0015% de B, 0,025-0,04% d'Al, ≤0,61% de Ceq, et le reste de Fe et des impuretés inévitables;
l'équivalent (%) de C dans les composants chimiques de l'acier à ultra-haute résistance est calculé par une formule comme suit:

$$Ceq = C + Mn / 6 + (Cr + Mo + V) / 5 + (Cu + Ni) / 15 \leqslant 0,61;$$

et dans lequel,
un processus de laminage en deux étapes est adopté lorsque le ébauche de coulée est laminé, le taux de déformation du laminage à un premier stade est ≥55% et le taux de déformation du laminage à un deuxième stade est ≥45%;
(2) le ébauche de coulée est chauffé: la température d'une section de chauffage est de 1240-1250°C, la température d'une section de trempage est contrôlée à 1220°C, la température de taraudage est comprise entre 1180°C et 1200°C, le temps dans le four est 350-420 min, la température de laminage initiale de la deuxième stade est ≤ 1050°C, l'épaisseur d'un produit fini est de 70 mm, l'épaisseur de l'ébauche de coulée à chauffer est contrôlée à ≥ 133mm, la temp érature de laminage finale de la deuxième stade est de 850- 860°C, et le refroidissement par air est effectué après le laminage;
(3) un traitement thermique trempe-revenu est effectué: la température de trempe est contrôlée à 880-890°C, le taux d'élévation de la température est de 1,5 ± 0,1 min / mm, le temps dans le four est de 125-135 min, la température de trempe est contrôlée à 590-600°C, le taux d'élé vation de la température est de 2,5 ± 0,1 min / mm, le temps dans le four est de 220 à 230 min, et un refroidissement lent est effectué à température ambiante; et
(4) le pré-redressage est effectué à 790-830°C tout d'abord lors du redressage par laminage à chaud.

2. Méthode de production de tôles d'acier à très haute résistance Q960E de grande épaisseur selon la revendication 1, dans lequel l'acier à ultra haute résistance comprend les composants chimiques suivants en pourcentage en poids: 0,16% de C, 0,23% de Si, 1,19% de Mn, ≤0,005% de P, ≤0,0012% de S, ≤0,1% de Cu, 0,45% de Cr, 0,78% de Ni, 0,2% de Mo, 0,02% de Nb, 0,013% de Ti, 0,044% de V, ≤0,0012% de B, 0,033% d'Al et 0,55% de Ceq.

FIG.1(a)

FIG.1(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102560274 A
- CN 101451221 A
- CN 102134680 A